## Europäisches Patentamt
## European Patent Office
## Office européen des brevets

(19)

(11) Numéro de publication: **0 030 234**
**B1**

(12)

# FASCICULE DE BREVET EUROPEEN

(45) Date de publication du fascicule du brevet: **22.02.84**

(51) Int. Cl.³: **G 06 K 9/22, G 06 F 3/03**

(21) Numéro de dépôt: **80900978.0**

(22) Date de dépôt: **10.06.80**

(86) Numéro de dépôt international:
**PCT/CH80/00069**

(87) Numéro de publication internationale:
**WO 80/02883 24.12.80 Gazette 80/29**

(54) **DISPOSITIF POUR MESURER DES PARAMETRES CARACTERISTIQUES DE LA VITESSE D'UNE ECRITURE MANUSCRITE.**

(30) Priorité: **12.06.79 CH 5474/79**

(43) Date de publication de la demande:
**17.06.81 Bulletin 81/24**

(45) Mention de la délivrance du brevet:
**22.02.84 Bulletin 84/8**

(84) Etats contractants désignés:
**AT CH DE FR GB LI NL SE**

(56) Documents cités:
**FR - A - 2 155 878**
**FR - A - 2 298 082**
**US - A - 4 029 899**
**US - A - 4 078 226**

**Transactions of the I.E.C.F.,Japan,section E, volume E61, no. 7, July 1978 (Tokyo,JP),H. Yoshida et al. "Input pen used for electromagnetically coupled data tablet", pages 561 to 562**

**IBM Technical disclosure bulletin, volume 22, no. 3, August 1979, (Armonk, US),P.Stuckert "Magnetic pen and tablet", pages 1245-1251**

(73) Titulaire: **BATTELLE MEMORIAL INSTITUTE**
**7 route de Drize**
**CH-1227 Carouge/Genève (CH)**

(72) Inventeur: **BECHET, Louis**
**"Les Govilles", Bonnatrait**
**F-74140 Douvaine (FR)**

(74) Mandataire: **Dousse, Blasco et al,**
**7, route de Drize**
**CH-1227 Carouge/Genève (CH)**

Courier Press, Leamington Spa, England.

Dispositif pour mesurer des paramètres caractéristiques de la vitesse d'une écriture manuscrite

## Domaine technique

L'invention se rapporte à un dispositif pour mesurer des paramètres caractéristiques de la vitesse d'une écriture manuscrite, comprenant un aimant adjacent à la pointe traçante de l'instrument d'écriture et dont l'aimantation est choisie pour être d'orientation générale parallèle à l'axe longitudinal dudit instrument et symétrique autour de cet axe. Son fonctionnement est basé sur des forces électromotrices induites par l'instrument d'écriture dans des bobines captrices.

## Etat de la technique

L'analyse dynamique de l'écriture a déjà fait l'objet de nombreux travaux. C'est ainsi que l'on a déjà proposé de traduire la vitesse d'écriture en un signal électrique proportionnel. Pour atteindre cet objectif, on a notamment proposé de mesurer l'accélération de l'instrument d'écriture et d'en déduire la vitesse par intégration de l'accélération mesurée. La présence d'éléments de mesure sur l'instrument d'écriture nécessite de relier l'instrument à un appareil de traitement d'information. Ceci suppose la présence d'un fil ce qui est gênant. En outre, les accéléromètres sont sensibles à leur orientation autour de l'axe longitudinal de l'instrument d'écriture. C'est la raison pour laquelle une solution où l'instrument est insensible à son orientation dans l'espace est souhaitable.

On a déjà proposé de remédier à cet inconvénient par un système de capteurs inductifs décrits dans la demande PCT No. WO79/00363. Selon ce mode de mesure, des tensions sont induites dans deux portions de bobines croisées placées sous la surface d'écriture, par un aimant permanent placé dans le stylo.

Un autre probème inhérent à ce mode d'analyse de l'écriture est celui de l'élimination des bruits parasites qui sont provoqués par les déplacements de l'instrument d'écriture non générateurs d'un tracé, c'est-à-dire des déplacements qui sont communiqués à cet instrument lorsque sa pointe traçante ne touche pas le support d'écriture. Il a déjà été proposé des solutions utilisant des systèmes de contacts comme par exemple dans le brevet US 4.078.226. Ceux-ci sont délicats du fait qu'ils doivent être sensibles à des pressions faibles et ceci en un point quelconque du support d'écriture. On a aussi proposé de placer le système de contact sur l'instrument d'écriture, ce qui suppose qu'une source de courant est reliée à l'instrument ou lui est associée. Même dans ce cas le contact est une source de mauvais fonctionnement, sans parler de la complication de la solution.

On connait par ailleurs du brevet US - A - 4 029 899 un dispositif de détection graphique comprenant une pluralité de bobines, bobinées alternativement en sens contraires pour produire un signal lorsqu'un flux magnétique passe d'une bobine à l'autre, caractéristique de la position de l'instrument d'écriture associé au flux magnétique. Un tel dispositif n'a donc pas de lien direct avec la mesure de la dynamique d'écriture, mais se rapporte plutôt à la reproduction graphique de la cinétique de l'écriture. Enfin il est connu, du document FR - A - 2 155 878 un dispositif tel que décrit dans le préambule de la revendication n° 1, pour mesurer des paramètres caractéristiques de la vitesse d'une écriture manuscrite.

## Exposé de l'invention

Le but de la présente invention est de remédier au moins en partie aux inconvénients des solutions susmentionnées.

A cet effet, la présente invention a pour objet un dispositif pour mesurer des paramètres caractéristiques de la vitesse d'une écriture manuscrite, comprenant un aimant adjacent à la point traçante de l'instrument d'écriture et dont l'aimantation est choisie pour être d'orientation générale parallèle à l'axe longitudinal dudit instrument et symétrique autour de cet axe. Ce dispositif est caractérisé par le fait qu'il comporte, sous-jacent à la surface constituant le support d'écriture, quatre enroulements superposés de conducteurs électriques couplés en série par paires mais avec des sens d'enroulement opposés, les enroulements d'une même paire comprenant deux nappes formées de portions de conducteurs rectilignes côte-à-côte, les portions de conducteurs d'une nappe étant parallèles et superposées aux portions analogues de l'autre nappe, les parties restantes des enroulements de cette paire s'étendant respectivement de part et d'autre de leurs parties superposées, les portions de conducteurs rectilignes des nappes d'une paire d'enroulement étant orthogonales à celles de l'autre paire, la zone de superposition de ces conducteurs délimitant la superficie de la surface dudit support d'écriture, le tout de manière que lorsque les composantes de mouvement de cet instrument sont parallèles au plan dudit support, les tensions induites s'ajoutent aux bornes de ces paires d'enroulement, en fonction de la vitesse et de la direction de variation du champ vis-à-vis de ces portions de conducteurs rectilignes, tandis que les tensions induites s'annulent dans chaque paire d'enroulement lorsque les composantes de mouvement de cet instrument sont perpendiculaires à ce plan.

## Description sommaire des dessins

Le dessin annexé illustre, schématiquement et à titre d'exemple une forme d'exécution du dispositif objet de la présente invention.

La figure 1 est une vue en plan illustrant le principe de bobinage des bobines du dispositif de mesure.

La figure 2 est une vue en plan du bobinage de ce dispositif.

La figure 3 est une vue en élévation en coupe de ce dispositif.

## Meilleure manière de réaliser l'invention

La figure 4 représente le schéma électrique du dispositif.

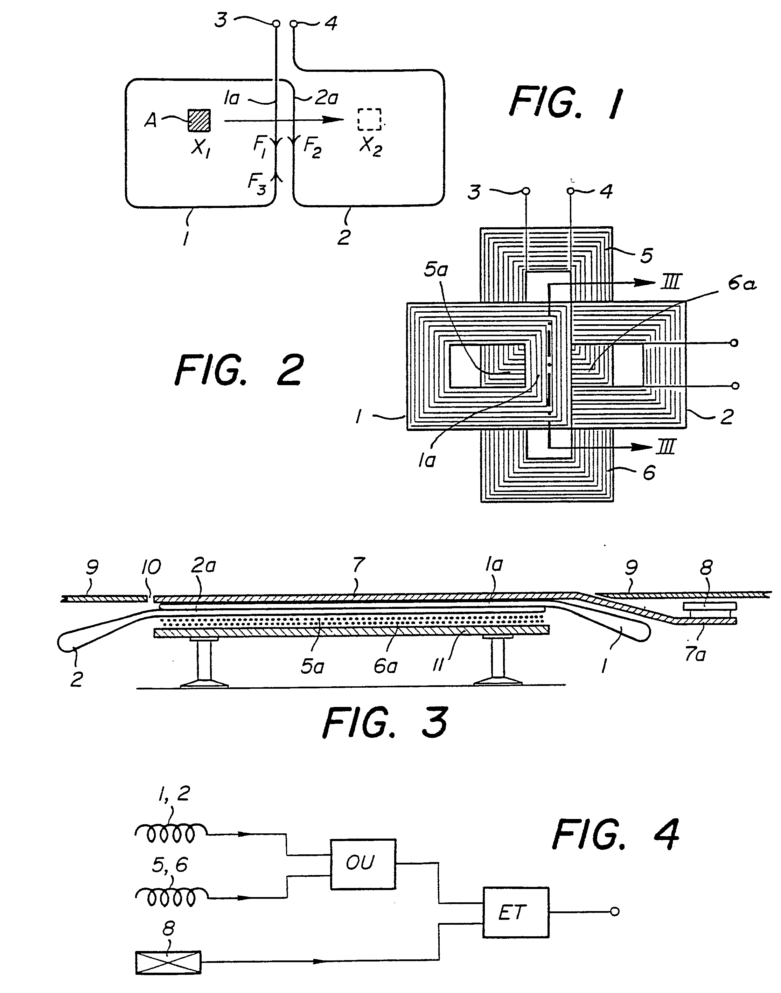

Le bobinage de fil électriquement conducteur illustré par la figure 1 a volontairement été simplifié afin de ne faire apparaître qu'une spire pour chaque bobine 1 et 2, ces spires sont couplées en série l'une à l'autre tandis que les deux extrémités libres de ces mêmes bobines sont reliées à des bornes 3 et 4. Les portions adjacentes 1a et 2a de ces bobines sont rectilignes et constituent deux côtés opposés des spires respectives, de sorte que ces spires s'étendent respectivement de part et d'autre de leurs portions rectilignes adjacentes. La zone captrice de ces bobines est constituée par ces portions adjacentes rectilignes 1a et 2a de ces bobines.

Ce dispositif est basé sur l'induction d'une force électromotrice créant une différence de potentiel aux bornes des spires 1 et 2 soumises à une variation du champ magnétique d'un aimant A dont le flux est sensiblement perpendiculaire au plan des spires 1 et 2. On a déjà expliqué dans la demande de brevet PCT/CH78/00048 que la tension aux bornes d'une spire est directement proportionnelle à la vitesse de variation du champ transversalement au portions 1a et 2a de ces spires. En pratique, l'instrument d'écriture présente un corps cylindrique et l'aimant permanent est choisi pour que l'orientation générale de son aimantation soit parallèle à l'axe longitudinal de cet instrument et symétrique autour de cet axe.

Dans un circuit fermé on sait que le courant induit produit un flux qui s'oppose à la variation de flux inducteur, donc que le flux du courant induit se retranche du flux inducteur si celui-ci croît, et s'ajoute à lui s'il diminue. Lorsque l'aimant A se déplace du point $x_1$ au point $x_2$, la spire 1 voit décroître le flux inducteur de sorte que le courant induit a le sens de la flèche $F_1$ tandis que la spire 2 le voit croître et le flux du courant induit s'ajoute à lui en prenant le sens de la flèche $F_2$. Il s'ensuit alors que les courants des bobines 1 et 2 s'additionnent aux bornes 3 et 4.

Supposons maintenant que l'aimant se déplace verticalement par rapport au plan des bobines 1 et 2 en s'en rapprochant, selon la règle du tire-bouchon de Maxwell, le sens du courant induit a le sens contraire du mouvement du tire-bouchon étant donné que le flux d'induction croît. Donc le sens du courant dans la spire 1 sera celui de la flèche $F_3$ et dans la spire 2 celui de la flèche $F_2$. Par conséquent les courants s'annulent dans ce cas aux bornes 3 et 4.

Cette disposition des bobines 1 et 2 en série mais enroulées selon deux sens opposés permet ainsi de n'induire un signal aux bornes 3 et 4 que pour des déplacements de l'aimant A parallèles au plan de la surface des portions 1a et 2a.

Une seconde paire de bobines 5 et 6 (fig. 2) couplées comme les bobines 1 et 2 est disposée de manière que ses nappes de portions de conducteurs rectilignes adjacentes et parallèles 5a et 6a coupent à angle droit les nappes des portions de conducteurs 1a et 2a. La zone où ces quatre nappes de portions de conducteurs 1a, 2a, 5a et 6a se recouvrent constituera la surface de détection de la vitesse de l'aimant A solidaire d'un instrument d'écriture (non représenté), selon deux directions orthogonales, parallèles aux plans des nappes de spires superposées.

L'agencement des bobines 1, 2, 5 et 6, en éliminant les tensions induites par des variations de champ magnétique consécutives à des déplacements de l'aimant perpendiculaires aux plans des nappes de spires 1a, 2a, 5a et 6a, crée déjà un filtrage important qui n'élimine cependant pas les tensions parasites induites par des déplacements de l'aimant parallèles à la surface d'écriture. Pendant l'écriture, un certain nombre de déplacements parallèles au plan d'écriture se produisent, or ils sont générateurs d'une tension parasite aux bornes des bobines 1, 2 et 5, 6, sans qu'il soit possible de reconnaître l'origine de cette tension lors du traitement du signal. C'est la raison pour laquelle il est envisagé de recueillir une deuxième information et de solliciter la concordance simultanée des deux informations pour traiter le signal relatif à la tension engendrée dans les bobines 1, 2, 5, 6.

A cet effet, on associe à la surface d'écriture 7 un capteur piézo-électrique 8 constitué par une pastille fixée à un prolongement 7a de la surface d'écriture 7 sous-jacent à une plaque d'appui 9 coplanaire à la surface d'écriture et présentant une ouverture 10 destinée à laisser passer la surface d'écriture solidaire d'une plaque de support 11, entre lesquelles sont superposées les quatre nappes de portions de conducteurs 1a, 2a, 5a, 6a des deux paires de bobines respectives. Ce montage est prévu pour que le capteur piézo-électrique 8 n'enregistre que les vibrations de la surface d'écriture 7.

On a mesuré que, suivant la nature de la pointe traçante de l'instrument d'écriture et celle de la surface d'écriture, la fréquence des vibrations occasionnées par le frottement de la pointe traçante sur la surface d'écriture est de l'ordre de 100 à 300 Hz. Par conséquent, il faut agencer le circuit de traitement du signal pour que les tensions aux bornes des bobines 1, 2 et 5, 6 ne soient analysées que s'il y a apparition simultanée d'une fréquence supérieure à 100 Hz. Ce circuit de déclenchement du traitement d'information est illustré par la figure 4 dans laquelle on a représenté les bobines 1, 2 et 5, 6 ainsi que le détecteur piézo-électrique 8. Les deux paires de bobines sont reliées en parallèle à un élément logique OU dont la sortie est reliée en parallèle avec le capteur piézo-électrique à un élément logique ET, de sorte que le traitement du signal issu des bobines 1, 2 et 5, 6 ne débute que si deux signaux apparaissent simultanément à l'entrée de l'élément ET.

Grâce à cet agencement de bobines et à la présence du détecteur piézo-électrique 8, le dispositif décrit permet, sans organe de contact ou autre organe mobile de n'enregistrer que les tensions engendrées par les déplacements de l'instrument d'écriture lorsque sa pointe traçante touche la surface d'écriture.

De plus, l'agencement des bobines 1, 2, 5 et 6 permet également d'éliminer les courants parasites provenant de n'importe quel appareil électrique à courant alternatif fonctionnant à proximité du dispositif et créant un bruit qui s'ajoute au signal enregistré. En effet, étant donné que le champ électrique alternatif perturbateur est celui dont les lignes de flux sont perpendiculaires au plan des nappes 1, 2, 5 et 6, les courants induits dans chaque paire de bobines 1, 2 respectivement 5, 6 s'annulent pour les mêmes raisons que celles expliquées précédemment en relation avec la figure 1.

Possibilité d'exploitation industrielle

Le dispositif décrit est notamment utilisable industriellement pour comparer le tracé d'une signature effectuée par une personne inconnue avec les paramètres de vitesse d'un spécimen de la signature d'une personne dont l'identité est connue.

Revendications

1. Dispositif pour mesurer des paramètres caractéristiques de la vitesse d'une écriture manuscrite, comprenant un aimant (A) adjacent à la pointe traçante de l'instrument d'écriture et dont l'aimantation est choisie pour être d'orientation générale parallèle à l'axe longitudinal dudit instrument et symétrique autour de cet axe, caractérisé par le fait qu'il comporte, sous-jacent à la surface constituant le support d'écriture (7), quatre enroulements superposés de conducteurs électriques (1, 2, 5, 6) couplés en série par paires mais avec des sens d'enroulement opposés, les enroulements d'une même paire comprenant deux nappes formées de portions de conducteurs rectilignes côte-à-côte (1a, 2a, 5a, 6a), les portions de conducteurs d'une nappe étant parallèles et superposées aux portions analogues de l'autre nappe, les parties restantes des enroulements de cette paire s'étendant respectivement de part et d'autre de leurs parties superposées, les portions de conducteurs rectilignes (1a, 2a) des nappes d'une paire d'enroulements (1, 2) étant orthogonales à celles (5a, 6a) de l'autre paire (5, 6), la zone de superposition de ces conducteurs délimitant la superficie de la surface dudit support d'écriture (7), le tout de manière que lorsque les composantes de mouvement de cet instrument sont parallèles au plan dudit support, les tensions induites s'ajoutent aux bornes de ces paires d'enroulement, en fonction de la vitesse et de la direction de variation du champ vis-à-vis de ces portions de conducteurs rectilignes, tandis que les tensions induites s'annulent dans chaque paire (1, 2; 5, 6) d'enroulement lorsque les composantes de mouvement de cet instrument sont perpendiculaires à ce plan.

2. Dispositif selon la revendication 1, caractérisé par le fait que ces deux paires d'enroulements (1, 2, 5, 6) sont connectées en parallèle à un élément logique OU dont la sortie est connectée, en parallèle avec un détecteur piézoélectrique (8) associé audit support d' ture, à un élément logique ET.

Patentansprüche

1. Vorrichtung zum Messen der charakteristischen Parameter der Geschwindigkeit einer Handschrift, mit einem Magneten (A) nahe dem aufzeichnenden Punkt des Schreibgerätes, dessen Magnetisierung so gewählt ist, daß die allgemeine Ausrichtung parallel zur Längsachse des Gerätes und symmetrisch zur Achse ist, dadurch gekennzeichnet, daß sie unterhalb der den Schriftträger (7) bildenden Fläche vier übereinanderliegende Wicklungen elektrischer Leiter (1, 2, 5, 6) aufweist, die paarweise, jedoch mit entgegengesetztem Wicklungssinn verbunden sind, daß die Wicklungen eines Paares zwei Abschnitte aufweisen, die von Teilen nebeneinanderliegender, rechteckiger Leiter (1a, 2a, 5a, 6a) gebildet sind, wobei die Teile der Leiter eines Abschnittes zu den analogen Teilen des anderen Abschnittes parallel und übereinanderliegend angeordnet sind und die restlichen Teile der Wicklungen dieses Paares sich jeweils beiderseits von ihren übereinanderliegenden Teilen erstrecken, daß die Teile der rechteckigen Leiter (1a, 2a) der Abschnitte des einen Wicklungspaares (1, 2) orthogonal zu jenen (5a, 6a) des anderen Paares (5, 6) sind, daß die Überlagerungszone dieser Leiter die Flächenausdehnung der Fläche des Schriftträgers (7) begrenzt und daß all dies so ist, daß, wenn die Bewegungskomponenten dieses Gerätes parallel zur Ebene dieses Trägers sind, die induzierten Spannungen den Anschlüssen dieses Wicklungspaares in Funktion der Geschwindigkeit und der Richtung der Änderungen des Feldes gegenüber diesen Teilen der rechteckigen Leiter zugeleitet werden, wohingegen die induzierten Spannungen sich in jedem Wicklungspaar (1, 2; 5, 6) aufheben, wenn die Bewegungskomponenten dieses Gerätes senkrecht zu dieser Ebene sind.

2. Vorrichtung nach Anspruch 1, dadurch gekennzeichnet, daß diese beiden Wicklungspaare (1, 2, 5, 6) parallel mit einem logischen ODER-Element verbunden sind, dessen Ausgang parallel zu einem piezo-elektrischen Detektor (8), der mit dem Schriftträger verbunden ist, an ein logisches UND-Element angeschlossen ist.

## Claims

1. A device for measuring characteristic parameters of the speed of handwriting, comprising a magnet (A) which is adjacent the tracing point of the writing instrument and the magnetization of which is selected so as to be of a general direction parallel to the longitudinal axis of the said instrument and symmetrical about this axis, characterised in that it comprises four superposed electric conductor coils (1, 2, 5, 6) which are located below the surface forming the writing support (7) and are coupled in series in pairs but with opposite winding directions, the coils of one pair comprising two layers formed of rectilinear conductor portions (1a, 2a, 5a, 6a) adjacent one another, the conductor portions of one sheet being parallel to and superposed on the analogous portions of the other sheet, the remaining parts of the coils of the pair extending respectively on opposite sides of their superposed parts, the rectilinear conductor portions (1a, 2a) of the layers of one pair of coils (1, 2) being at right angles to those (5a, 6a) of the other pair (5, 6), the region in which these conductors are superposed defining the surface area of the said writing support (7), the arrangement being such that when the components of movement of the writing instrument are parallel to the plane of the said support, the voltages induced are added to one another at the terminals of the said pairs of coils, as a function of the speed and direction of variation of the field with respect to the said rectilinear conductor portions, whilst the voltages induced cancel out one another in each pair of coils (1, 2; 5, 6) when the components of movement of the writing instrument are perpendicular to the said plane.

2. A device as claimed in claim 1, characterised in that the said two pairs of coils (1, 2; 5, 6) are connected in parallel to an OR logic element, the output of which is connected — in parallel with a piezo-electric detector (8) associated with the said writing support — to an AND logic element.

FIG. 1

FIG. 2

FIG. 3

FIG. 4